# EUROPÄISCHE PATENTSCHRIFT

(11) **EP 2 243 584 B1**
(45) Veröffentlichungstag und Bekanntmachung des Hinweises auf die Patenterteilung: **28.03.2018**
(21) Anmeldenummer: 10003930.4
(22) Anmeldetag: 14.04.2010
(51) Int. Cl.: B23K 11/06, B23K 11/36

(54) **Vorrichtung und Verfahren zur Herstellung von Behälterzargen aus Metallblech**
Method and device for manufacturing container frames from such sheet metal
Dispositif et procédé destinés à la fabrication de dormants de récipients en tôle métallique

(30) Priorität: 22.04.2009 CH 6342009
(43) Veröffentlichungstag der Anmeldung: 27.10.2010
(73) Patentinhaber: Soudronic AG, 8962 Bergdietikon (CH)
(72) Erfinder: Müller, Willi, 8966 Oberwil-Lieli (CH); Dieterich, Daniel, 8335 Hittnau (CH)
(74) Vertreter: Schalch, Rainer

(56) Entgegenhaltungen:
- EP-A1- 0 692 334
- EP-A1- 0 761 368
- CH-A5- 602 255
- DE-A1- 3 711 771

## Beschreibung

### Hintergrund der Erfindung

Die Erfindung betrifft eine Vorrichtung und ein Verfahren zur Herstellung von Behälterzargen aus Metallblech gemäss Oberbegriff des Anspruchs 1 bzw. gemäss Oberbegriff des Anspruchs 10.

### Stand der Technik

Vorrichtungen und Verfahren der eingangs genannten Art bzw. Widerstandsnahtschweissmaschinen zur Herstellung von Behälterzargen sind bekannt. Sie erlauben insbesondere die Einstellung des Schweissstroms anhand von geschweissten Testzargen. Bei der Änderung von Einflüssen auf das Herstellungsverfahren kann das Schweissresultat negativ beeinflusst werden; ein Betreiber einer Herstellungslinie für Behälterzargen kann aber ohne spezifisches Fachwissen kaum feststellen, welche Einflüsse zu dem negativen Resultat führen. Vorrichtungen der eingangs genannten Art sind aus CH-A 602 255 und EP-A 629 334 bekannt. Aus EP-A 761 368 ist es bekannt, die Beschichtungsdicke einer zu schweissenden Zarge zu messen und die Schweissstromstärke in Abhängigkeit vom Messresultat einzustellen.

### Darstellung der Erfindung

Der Erfindung liegt die Aufgabe zu Grunde das Verfahren zur Herstellung von Behälterzargen und die dazu verwendete Vorrichtung bzw. Widerstandsnahtschweissmaschine zu verbessern.

Diese Aufgabe wird mit den kennzeichnenden Merkmalen des Anspruchs 1 bzw. mit den kennzeichnenden Merkmalen des Anspruchs 10 gelöst.

Es ergibt sich damit ein "adaptives" Herstellungsverfahren, bei welchem Störgrössen detektiert und mittels geeigneten Stellgrössen möglichst weitgehend kompensiert werden, so dass eine kontinuierliche Schweissnahtqualität sichergestellt ist. Auch ein Betreiber des Verfahrens bzw. der Vorrichtung mit wenig Erfahrung in der Schweisstechnik und ohne spezifisches Wissen über die Systemeigenschaften der Herstellvorrichtung und des zu verarbeitenden Materials kann dadurch die Herstellung optimal ausführen. Die Stellgrössen bzw. die Produktionsparameter sind mit Aktoren betreibbar bzw. sind maschinell einstellbar und somit sind die Produktionsparameter auch nachverfolgbar und reproduzierbar.

Besonders vorteilhafte Ausgestaltungen des Verfahrens und der Vorrichtung sind in den abhängigen Ansprüchen definiert.

### Kurze Beschreibung der Zeichnungen

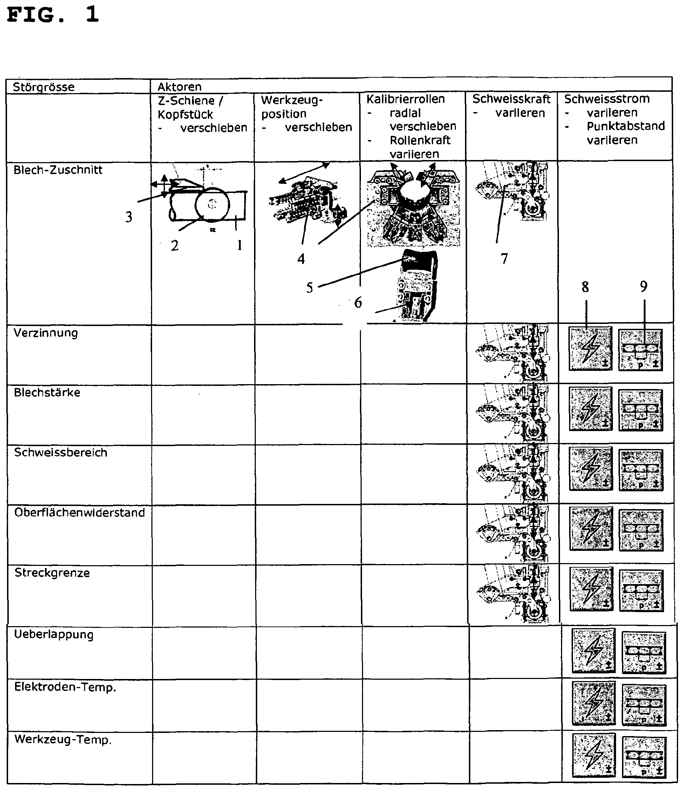

Im Folgenden werden Ausführungsbeispiele der Erfindung anhand der Zeichnungen näher erläutert. Dabei zeigt
Figur 1 eine Tabelle mit Störgrössen und entsprechend zu betätigenden Stellgrössen.

### Wege zur Ausführung der Erfindung

Der bekannte Schweissprozess ist primär über den Schweissstrom geregelt. Der korrekte Schweissstrom ist dabei beim Rollnaht-Widerstandsschweissen von Behälterzargen abhängig von den Eigenschaften des Zargenmaterials, von der Geometrie der gerundeten Zarge, von den physikalischen Eigenschaften und der Position der Schweisselektroden und beim Vorhandensein von Drahtzwischenelektroden von den Eigenschaften des Drahtsystems. Ferner von der Eigenschwingungsform des Schweisssystems und von den primären Schweissparametern, wie der Form des Schweissstromverlaufs und dem Punktabstand der aufeinanderfolgenden Schweisspunkte. Weiter sind Maschinenparameter der Schweissvorrichtung bzw. der Rollnaht-Widerstandsschweissmaschine zu beachten, wie die Schweissgeschwindigkeit, der Isolationsgrad und die Grösse des Schweissfensters. In der Produktion von Behälterzargen variieren einige der genannten Einflussgrössen, insbesondere das Zargenmaterial und die Zuschnittsmasse des Zargenmaterials. Diese und andere Störgrössen beeinflussen die Schweissnahtqualität.

Die Tabelle von Figur 1 nennt in der linken Spalte die Störgrössen, die mittels entsprechender Sensorik maschinell erfasst werden, und zeigt in den fünf Spalten rechts von der linken Spalte die Stellgrössen, die durch entsprechende Aktoren mechanisch beeinflusst werden können oder welche im Falle des Schweissstroms bzw. des Schweisspunktabstands (Spalte ganz rechts) elektronisch eingestellt werden.

In Zeile 1 der Tabelle ist als erste Störgrösse, die einen Einfluss auf die Qualität der Schweissnaht der Behälterzarge hat, der Blechzuschnitt genannt. Die einzelnen Bleche für die Behälterzargen werden mittels Blechscheren aus grossen Blechtafeln zugeschnitten. Die Schweissnahtqualität störende Eigenschaften des Blechzuschnitts sind dabei insbesondere Geometriefehler (Abweichungen des Zuschnitts von der rechteckigen oder quadratischen Sollform) oder das Vorliegen von Brauen an den Schnittkanten. Als Sensoren zur Erkennung solcher Störgrössen beim Blechzuschnitt kommen die periodische Messung von zugeschnittenen Blechen nach dem Schneidvorgang in Frage (insbesondere die Offlinemessung von einzelnen Blechen oder die kontinuierliche Messung nach dem Schneiden). Die Messung erfolgt mechanisch oder berührungslos, z.B. optisch. Es ist aber auch möglich Geometriefehler über eine Kraftmessung an einer Kalibrierrolle im Kalibrierwerkzeug der Widerstandsschweissmaschine zu ermitteln. Als Stellgrössen für die Kompensation der Störgrösse "Blechzuschnitt" werden einzeln oder in beliebigen Kombinationen die folgenden Stellgrössen verwendet:
(i) Die Z-Schiene der Widerstandschweissmaschine oder wenigstens deren Kopfstück wird verschoben. In der Figur 1 ist der Unterarm 1 der Rollnaht-Widerstandsschweissmaschine und die untere Schweissrolle 2 dargestellt. Das vordere Ende der Z-Schiene 3 bzw. deren Kopfstück im Falle eines separaten Kopfstücks ist ebenfalls ersichtlich. Gemäss den dargestellten Pfeilen wird entweder die Z-Schiene als ganzes oder deren Kopfstück horizontal oder/und vertikal (bezogen auf die Bodenstandfläche der Schweissmaschine) verstellt, um die Störgrösse "Blechzuschnitt" zu kompensieren. Als Aktor für die Verstellung wird dabei z.B. ein piezoelektrischer Aktor verwendet, da nur sehr geringe Verstellwege benötigt werden.
(ii) Die Position des Kalibrierwerkzeugs der Rollnaht-Widerstandsschweissmaschine wird verschoben. Dies ebenfalls horizontal oder/und vertikal (bezogen auf die Bodenstandfläche der Maschine). In der Figur 1 ist das an sich bekannte Werkzeug 4 dargestellt. Mittels nicht dargestellter Aktoren, welche z.B. elektromotorische Aktoren oder piezoelektrische Aktoren oder pneumatische Aktoren sind, wird die Verstellung mechanisch vorgenommen, um die Störgrösse "Blechzuschnitt" möglichst weitgehend zu kompensieren.
(iii) Kalibrierrollen des Werkzeugs werden radial verstellt oder/und die Rollenkraft wird variiert. Gezeigt ist in der Tabelle das Kalibrierwerkzeug 4 mit den Rollen 5, die beim Durchlauf auf den einzelnen Zargenrohling einwirken. Ein Einstellmittel bzw. ein Aktor 6 (z.B. elektromotorisch oder piezoelektrisch oder pneumatisch) ist bei mindestens einer Rolle 5, bei mehreren Rollen 5 oder bei allen Rollen 5 vorgesehen, um die radiale Lage der Rollen auf das Durchlaufzentrum hin zu verstellen und/oder um die Kraft einzustellen, mit welcher die jeweilige Rolle auf den durchlaufenden Zargenrohling einwirkt.
(iv) Die Schweisskraft wird variiert. In der Figur 1 ist dazu die Halterung 7 der oberen Schweissrolle der Widerstandsnahtschweissmaschine dargestellt. Die bekannte Schweisskrafteinstellung wird hier so ausgeführt, dass sie im Betrieb verstellt werden kann, dies in Abhängigkeit von der Störgrösse.
(v) Der Schweissstrom wird in seiner Stärke variiert und/oder der Abstand der Schweisspunkte wird variiert (durch Variation der Frequenz des Schweissstroms). Dies ist in Figur 1 mit der Schweissstromstärkeneinstellung 8 und mit der Punktabstandseinstellung 9 dargestellt. Ein handelsüblicher Schweissstromgenerator für Widerstandschweissmaschinen mit solchen Einstellmöglichkeiten wird von der Firma Soudronic AG, Bergdietikon, Schweiz, hergestellt.

Die Stellgrössen (i) bis (v) werden einzeln oder in Kombination durch eine Steuerung eingestellt, welche als Eingangswert ein Mass für die Störgrösse bzw. die Störgrössen erhält und die Stellgrösse oder die Stellgrössen einstellt. Dies derart, dass der Einfluss der Störgrösse(n) auf die Schweissnahtqualität vermindert wird bzw. kompensiert wird.

Als weitere Störgrösse kann die Verzinnung der Randzone des Metallblechs erfasst werden. Dazu kann eine Markierung der Randbleche vorgesehen sein, welche herstellungsbedingt eine Abweichung in der Verzinnungsdicke aufweisen. Diese Markierung wird dann im Rundapparat der Vorrichtung erfasst und der Steuerung weitergeleitet. Es kann alternativ eine online-Messung der Verzinnungsdicke im Rundapparat vorgesehen sein. Als Stellgrössen für die Kompensation der Störgrösse Verzinnung sind die Variation der Schweisskraft und/oder die Variation des Schweissstroms und/oder des Schweisspunktabstands vorgesehen.

Als weitere Störgrösse kann die Blechstärke (Blechdicke) erfasst werden. Die Blechstärke kann im Rundapparat auf bekannte Weise gemessen werden und der Messwert oder eine Abweichung von vorgegebenen Grenzen wird der Steuerung zugeführt. Als Stellgrössen für die Kompensation der Störgrösse Blechstärke sind die Variation der Schweisskraft und/oder die Variation des Schweissstroms und/oder des Schweisspunktabstands vorgesehen.

Als weitere Störgrösse kann der Schweissbereich erfasst werden. Als Schweissbereich wird der Bereich verstanden, innert welchem regulär geschweisst werden kann, ohne dass durch Überschreiten des Schweissstroms bzw. der Schweisstemperatur sogenannte "Spritzer" an der Schweissnaht entstehen oder durch Unterschreiten des Schweissstroms bzw. der Schweisstemperatur ungeschweisste Stellen entlang der Schweissnaht entstehen. Der Messwert oder eine Abweichung von vorgegebenen Grenzen wird der Steuerung zugeführt. Als Stellgrössen für die Kompensation der Störgrösse Schweissbereich sind die Variation der Schweisskraft und/oder die Variation des Schweissstroms und/oder des Schweisspunktabstands vorgesehen.

Als weitere Störgrösse kann der elektrische Oberflächenwiderstand des Blechs erfasst werden. Dieser kann auf bekannte Weise online vor dem Schweissprozess gemessen werden und der Messwert oder eine Abweichung von vorgegebenen Grenzen wird der Steuerung zugeführt. Als Stellgrössen für die Kompensation der Störgrösse Oberflächenwiderstand sind die Variation der Schweisskraft und/oder die Variation des Schweissstroms und/oder des Schweisspunktabstands vorgesehen.

Als weitere Störgrösse kann die Streckgrenze des Blechmaterials erfasst werden. Die Streckgrenze kann im Rundapparat auf bekannte Weise gemessen werden und der Messwert oder eine Abweichung von vorgegebenen Grenzen wird der Steuerung zugeführt. Als Stellgrössen für die Kompensation der Störgrösse Streckgrenze sind die Variation der Schweisskraft und/oder die Variation des Schweissstroms und/oder des Schweisspunktabstands vorgesehen.

Als weitere Störgrösse kann die Überlappung der Zargenkanten erfasst werden. Die Überlappung kann im Kalibrierwerkzeug gemessen werden, indem eine Kraftmessung an mindestens einer Kalibrierrolle vorgenommen wird, um die Kraft festzustellen, mit welcher die Kalibrierrolle auf die Zarge einwirkt, wenn diese das Werkzeug durchläuft. Der Messwert oder eine Abweichung von vorgegebenen Grenzen wird der Steuerung zugeführt. Als Stellgrössen für die Kompensation der Störgrösse Überlappung sind die Variation der Schweisskraft und/oder die Variation des Schweissstroms und/oder des Schweisspunktabstands vorgesehen.

Als weitere Störgrösse kann die Elektrodentemperatur mindestens einer der Schweisselektroden erfasst werden. Dabei kann die Temperatur mindestens einer der Rollenelektroden und/oder die Temperatur der darauf laufenden Drahtelektrode mit einer bekannten Temperaturmesseinrichtung gemessen werden. Der Messwert oder eine Abweichung von vorgegebenen Grenzen wird der Steuerung zugeführt. Als Stellgrössen für die Kompensation der Störgrösse Elektrodentemperatur sind die Variation der Schweisskraft und/oder die Variation des Schweissstroms und/oder des Schweisspunktabstands vorgesehen.

Als weitere Störgrösse kann die Temperatur des Kalibrierwerkzeugs erfasst werden. Diese Temperatur kann auf bekannte Weise gemessen werden und der Messwert oder eine Abweichung von vorgegebenen Grenzen wird der Steuerung zugeführt. Als Stellgrössen für die Kompensation der Störgrösse Werkzeugtemperatur sind die Variation der Schweisskraft und/oder die Variation des Schweissstroms und/oder des Schweisspunktabstands vorgesehen.

Als weitere Störgrösse, die in der Tabelle nicht aufgeführt ist, können Eigenschaften des Elektrodendrahtsystems, insbesondere die Drahtprofilierung, gemessen werden. Als Stellgrössen für die Kompensation der Störgrösse Drahtsystem sind die Variation der Schweisskraft und/oder die Variation des Schweissstroms und/oder des Schweisspunktabstands vorgesehen.

Als Vorteile der Erfindung ergibt sich insbesondere, dass die Veränderungen von schweissqualitätsrelevanten Einflussfaktoren mittels automatischer Nachjustierung diverser Stellgrössen kompensiert werden können. Ferner kann die Nachjustierung automatisch erfolgen, was Manipulationsfehler praktische ausschliesst. Die Stillstandszeiten der Herstellungslinie werden reduziert, da manuelle Nachjustierungen entfallen und die Maschineneffizienz wird erhöht.

Somit wird bei der Herstellung von Behälterzargen mit Widerstandsnahtschweissmaschinen, insbesondere mit Rollnahtwiderstandsschweissmaschinen mit Drahtzwischenelektroden, mindestens eine Störgrösse erfasst, die die Schweissqualität beeinflusst, insbesondere Fehler des Blechzuschnitts. Aufgrund dieser Störgrössenerfassung wird mindestens eine Stellgrösse automatisch verändert, um den Einfluss der Störgrösse auf die Schweissnahtqualität zu kompensieren oder zu vermindern.

## Patentansprüche

1. Vorrichtung zur Herstellung von Behälterzargen aus Metallblech, insbesondere aus verzinntem Blech, umfassend einen Rundapparat, eine Förderanordnung für die gerundeten Zargenrohlinge, insbesondere mit einer Z-Schiene und einem Kopfstück, ein Kalibrierwerkzeug mit einer Vielzahl von Kalibrierrollen, eine Schweisseinrichtung mit einstellbarem Schweissstrom, insbesondere mit Drahtzwischenelektroden als Schweisselektroden, **dadurch gekennzeichnet, dass** eine Erfassungseinrichtung vorgesehen ist, die zur Erfassung mindestens einer die Schweissnahtqualität beeinflussenden Störgrösse während des Herstellungsprozesses ausgestaltet ist, und dass eine Kompensationseinrichtung zur Kompensation des Einflusses der Störgrösse auf die Schweissnahtqualität mittels mindestens einer Stellgrösse vorgesehen ist, wobei die Erfassungseinrichtung zur Erfassung der Störgrösse aus mindestens einer Eigenschaft des Zargenmaterials ausgestaltet ist, und dass die Erfassungseinrichtung derart ausgestaltet ist, um als Eigenschaft des Zargenmaterials die Geometrie des Blechzuschnitts zu ermitteln und/oder das Vorhandensein von Brauen am Blech-Zuschnitt zu ermitteln, und dass die Kompensationseinrichtung zur Veränderung einer oder mehrerer der folgenden Stellgrössen eingerichtet ist:
horizontales und/oder vertikales Verschieben der die Überlappung beeinflussenden Z-Schiene oder deren zum Kalibrierwerkzeug weisenden Kopfstücks durch einen Verschiebeantrieb;
horizontale und/oder vertikale Verschiebung des Kalibrierwerkzeugs durch einen Verschiebeantrieb;
radiale Verschiebung von Kalibrierrollen durch einen Verschiebeantrieb und/oder Variation der auf die Zarge wirkenden Rollenkraft;
Variation der Schweisskraft;
Variation des Schweissstromes und/oder des Abstandes der Schweisspunkte.

2. Vorrichtung nach Anspruch 1, **dadurch gekennzeichnet, dass** die Erfassungseinrichtung derart ausgestaltet ist, um als Eigenschaft die Verzinnung der Randzone zu erfassen, und dass die Kompensationseinrichtung zur Veränderung einer oder beider der folgenden Stellgrössen eingerichtet ist:
Variation der Schweisskraft;
Variation des Schweissstromes und/oder des Abstandes der Schweisspunkte.

3. Vorrichtung nach einem der Ansprüche 1 oder 2, **dadurch gekennzeichnet, dass** die Erfassungseinrichtung derart ausgestaltet ist, um als Eigenschaft die Blechstärke des Metallblechs zur erfassen, und dass die Kompensationseinrichtung zur Veränderung einer oder beider der folgenden Stellgrössen eingerichtet ist:
Variation der Schweisskraft;
Variation des Schweissstromes und/oder des Abstandes der Schweisspunkte.

4. Vorrichtung nach einem der Ansprüche 1 bis 3, **dadurch gekennzeichnet, dass** die Erfassungseinrichtung derart ausgestaltet ist, um als Störgrösse den Schweissbereich zwischen einer Schweissung mit zu hoher Temperatur und einer Schweissung mit zu tiefer Temperatur zu erfassen, und dass die Kompensationseinrichtung zur Veränderung einer oder beider der folgenden Stellgrössen eingerichtet ist:
Variation der Schweisskraft;
Variation des Schweissstromes und/oder des Abstandes der Schweisspunkte.

5. Vorrichtung nach einem der Ansprüche 1 bis 4, **dadurch gekennzeichnet, dass** die Erfassungseinrichtung derart ausgestaltet ist, um als Störgrösse den elektrischen Oberflächenwiderstand des Metallblechs zu erfassen, und dass die Kompensationseinrichtung zur Veränderung einer oder beider der folgenden Stellgrössen eingerichtet ist:
Variation der Schweisskraft;
Variation des Schweissstromes und/oder des Abstandes der Schweisspunkte.

6. Vorrichtung nach einem der Ansprüche 1 bis 5, **dadurch gekennzeichnet, dass** die Erfassungseinrichtung derart ausgestaltet ist, um als Störgrösse die Rundeigenschaften des Metallblechs und insbesondere dessen Streckgrenze zu erfassen, und dass die Kompensationseinrichtung zur Veränderung einer oder mehrerer der folgenden Stellgrössen eingerichtet ist:
Beeinflussung der Rundung durch Zustellen oder Öffnen des Rundapparates;
Variation der Schweisskraft;
Variation des Schweissstromes und/oder des Abstandes der Schweisspunkte.

7. Vorrichtung nach einem der Ansprüche 1 bis 6, **dadurch gekennzeichnet, dass** die Erfassungseinrichtung derart ausgestaltet ist, um als Störgrösse die Überlappung der Kanten des Zargenrohlings zu erfassen, insbesondere deren Geometrie und/oder Grösse, und dass die Kompensationseinrichtung zur Veränderung der folgenden Stellgrössen eingerichtet ist:
Variation des Schweissstromes und/oder des Abstandes der Schweisspunkte.

8. Vorrichtung nach einem der Ansprüche 1 bis 7, **dadurch gekennzeichnet, dass** die Erfassungseinrichtung derart ausgestaltet ist, um als Störgrösse eine Temperatur im Bereich des Schweissprozesses zu erfassen, insbesondere die Temperatur mindestens einer der Schweisselektroden, wobei insbesondere sich erneuernde Drahtelektroden vorgesehen sind, oder die Temperatur des Kalibrierwerkzeugs, und dass die Kompensationseinrichtung zur Veränderung der folgenden Stellgrössen eingerichtet ist:
Variation des Schweissstromes und/oder des Abstandes der Schweisspunkte.

9. Vorrichtung nach einem der Ansprüche 1 bis 8, **dadurch gekennzeichnet, dass** die Erfassungseinrichtung derart ausgestaltet ist, um eine Eigenschaft des Drahtelektrodensystems als Störgrösse zu ermitteln, insbesondere die Drahtprofilierung, und dass die Kompensationseinrichtung zur Veränderung der folgenden Stellgrössen eingerichtet ist:
Variation des Schweissstromes und/oder des Abstandes der Schweisspunkte.

10. Verfahren zur Herstellung von Behälterzargen aus Metallblech, insbesondere aus verzinntem Blech, bei welchem Zargenrohlinge gerundet und mit überlappenden Kanten einem Kalibrierwerkzeug zugeführt und anschliessend durch Rollnahtschweissung mit einem geregelten Schweissstrom geschweisst werden, **dadurch gekennzeichnet, dass** während des Herstellungsprozesses mindestens eine die Schweissnahtqualität beeinflussende Störgrösse erfasst wird, und dass mittels mindestens einer Stellgrösse eine Kompensation des Einflusses der Störgrösse auf die Schweissnahtqualität erfolgt, wobei die Störgrösse aus mindestens einer Eigenschaft des Zargenmaterials ermittelt wird, wobei als Eigenschaft des Zargenmaterials die Geometrie des Blechzuschnitts herangezogen wird und/oder das Vorhandensein von Brauen am Blech-Zuschnitt herangezogen wird, und dass die Kompensation durch Veränderung einer oder mehrerer der folgenden Stellgrössen erfolgt:
horizontales und/oder vertikales Verschieben der die Überlappung beeinflussenden Z-Schiene oder deren zum Kalibrierwerkzeug weisenden Kopfstück;
horizontale und/oder vertikale Verschiebung des Kalibrierwerkzeugs;
radiale Verschiebung von Kalibrierrollen und/oder Variation der auf die Zarge wirkenden Rollenkraft;
Variation der Schweisskraft;
Variation des Schweissstromes und/oder des Abstandes der Schweisspunkte.

11. Verfahren nach Anspruch 10, **dadurch gekennzeichnet, dass** als Störgrösse die Verzinnung der Randzone herangezogen wird, und/oder dass als Störgrösse die Blechstärke des Metallblechs herangezogen wird, und/oder dass als Störgrösse der Schweissbereich zwischen einer Schweissung mit zu hoher Temperatur und einer Schweissung mit zu tiefer Temperatur herangezogen wird, und/oder dass als Störgrösse der elektrische Oberflächenwiderstand des Metallblechs herangezogen wird, und dass die Kompensation durch Veränderung mindestens einer der folgenden Stellgrössen erfolgt:
Variation der Schweisskraft;
Variation des Schweissstromes und/oder des Abstandes der Schweisspunkte.

12. Verfahren nach einem der Ansprüche 10 oder 11, **dadurch gekennzeichnet, dass** als Störgrösse die Rundeigenschaften des Metallblechs und insbesondere dessen Streckgrenze herangezogen wird, und dass die Kompensation durch Veränderung einer oder mehrerer der folgenden Stellgrössen erfolgt:
Beeinflussung der Rundung durch Zustellen oder Öffnen des Rundapparates;
Variation der Schweisskraft;
Variation des Schweissstromes und/oder des Abstandes der Schweisspunkte.

13. Verfahren nach einem der Ansprüche 10 bis 12, **dadurch gekennzeichnet, dass** als Störgrösse die Überlappung der Kanten des Zargenrohlings herangezogen wird, insbesondere deren Geometrie und/oder Grösse, und dass die Kompensation durch Veränderung der folgenden Stellgrössen erfolgt:
Variation des Schweissstromes und/oder des Abstandes der Schweisspunkte.

14. Verfahren nach einem der Ansprüche 10 bis 13, **dadurch gekennzeichnet, dass** als Störgrösse eine Temperatur im Bereich des Schweissprozesses herangezogen wird, insbesondere die Temperatur mindestens einer der Schweisselektroden, wobei insbesondere sich erneuernde Drahtelektroden vorgesehen sind, oder die Temperatur des Kalibrierwerkzeugs, und/oder dass eine Eigenschaft des Drahtelektrodensystems als Störgrösse herangezogen wird, insbesondere die Drahtprofilierung, und dass die Kompensation durch Veränderung der folgenden Stellgrössen erfolgt:
Variation des Schweissstromes und/oder des Abstandes der Schweisspunkte.

## Claims

1. Device for manufacturing container bodies from metal sheet, particularly from tinned metal sheet, comprising a rounding apparatus, a conveying arrangement for the rounded bodies, particularly with a Z-rail and a head part, a calibration tool with a plurality of calibration rollers, a welding apparatus with adjustable welding current, particularly with intermediary wire electrodes as welding electrodes, **characterized in that** a collection arrangement is provided for collecting at least one disturbance variable influencing the welding seam quality during the manufacturing process, and **in that** a compensation arrangement for compensating the influence of the disturbance variable on the welding seam quality by means of at least a control variable is provided, wherein the collection arrangement is adapted for collecting the disturbance variable from at least one characteristic of the body material, and that the collection arrangement is adapted to collect the geometry of the metal sheet cutting and/or the presence of brows at the metal sheet cutting as a characteristic of the body material, and that the compensation arrangement is set up for changing one or more of the following control variables:
horizontal and/or vertical displacement of the Z-rail influencing the overlapping or of its head part pointing to the calibration tool, by means of a displacement actuator;
horizontal and/or vertical displacement of the calibration tool by means of a displacement actuator;
radial displacement of calibration rollers by means of a displacement actuator and/or variation of the roller force acting upon the body;
variation of the welding force;
variation of the welding current and/or of the distance between the welding spots.

2. Device according to claim 1, **characterized in that** the collection arrangement is adapted to collect the tinning of the edge zone as a characteristic and **in that** the collection arrangement is adapted to change one or both of the following control variables:
variation of the welding force;
variation of the welding current and/or of the distance between the welding spots.

3. Device according to claim 1 or 2, **characterized in that** the collection arrangement is adapted to collect the metal sheet thickness of the metal sheet as a characteristic and **in that** the collection arrangement is adapted to change one or both of the following control variables:
variation of the welding force;
variation of the welding current and/or of the distance between the welding spots.

4. Device according to one of the claims 1 to 3, **characterized in that** the collection arrangement is adapted to collect the welding range between a welding with a too high temperature and a welding with a too low temperature as disturbance variable and **in that** the collection arrangement is adapted to change one or both of the following control variables:
variation of the welding force;
variation of the welding current and/or of the distance between the welding spots.

5. Device according to one of the claims 1 to 4, **characterized in that** the collection arrangement is adapted to collect the electrical surface resistance of the metal sheet as disturbance variable, and **in that** the collection arrangement is adapted to change one or both of the following control variables:
variation of the welding force;
variation of the welding current and/or of the distance between the welding spots.

6. Device according to one of the claims 1 to 5, **characterized in that** the collection arrangement is adapted to collect the rounding characteristics of the metal sheet as disturbance variable, and particularly its yield strength, and **in that** the collection arrangement is adapted to change one or more of the following control variables:
influence on the rounding by closing or opening the rounding apparatus;
variation of the welding force;
variation of the welding current and/or of the distance between the welding spots.

7. Device according to one of the claims 1 to 6, **characterized in that** the collection arrangement is adapted to collect the overlapping of the edges of the body blank as disturbance variable, particularly its geometry and/or size, and that the compensation arrangement is set up to change the following control variable:
variation of the welding current and/or of the distance between the welding spots.

8. Device according to one of the claims 1 to 7, **characterized in that** the collection arrangement is adapted to collect a temperature in the area of the welding process as disturbance variable, particularly the temperature of at least one of the welding electrodes, wherein particularly renewable wire electrodes are provided, or the temperature of the calibration tool, and that the compensation arrangement is set up to change the following control variable:
variation of the welding current and/or of the distance between the welding spots.

9. Device according to one of the claims 1 to 8, **characterized in that** the collection arrangement is adapted to collect a characteristic of the wire electrode system as disturbance variable, particularly the wire profiling, and that the compensation arrangement is set up to change the following control variable:
variation of the welding current and/or of the distance between the welding spots.

10. Method for manufacturing container bodies from metal sheet, particularly from tinned metal sheet, wherein body blanks are rounded and passed to a calibration tool with overlapping edges and are subsequently welded with a regulated welding current by means of roller seam welding, **characterized in that** at least a disturbance variable which influences the welding seam quality is collected during the manufacturing process and **in that** a compensation of the influence of the disturbance variable on the welding seam quality takes place by means of at least a control variable,
wherein the disturbance variable is determined from at least a characteristic of the body material,
wherein the geometry of the metal sheet cutting and/or the presence of brows at the metal sheet cutting is taken as characteristic of the body material, and
wherein the compensation takes place by changing one or more of the following control variables:
horizontal and/or vertical displacement of the Z-rail influencing the overlapping or its head part pointing to the calibration tool;
horizontal and/or vertical displacement of the calibration tool;
radial displacement of calibration rollers and/or variation of the roller force acting upon the body;
variation of the welding force;
variation of the welding current and/or of the distance between the welding spots.

11. Method according to claim 10, **characterized in that** the tinning of the edge zone is taken as disturbance variable and/or the metal sheet thickness of the metal sheet is taken as disturbance variable and/or that the welding range between a welding with a too high temperature and a welding with a too low temperature is taken as disturbance variable and/or that the electrical surface resistance of the metal sheet is taken as disturbance variable, and **in that** the compensation takes place by changing at least one of the following control variables:
variation of the welding force;
variation of the welding current and/or of the distance between the welding spots.

12. Method according to one of the claims 10 or 11, **characterized in that** the rounding characteristics of the metal sheet and particularly its yield strength is taken as disturbance variable and **in that** the compensation takes place by means of changing one or more of the following control variables:
influence on the rounding by closing or opening the rounding apparatus;
variation of the welding force;
variation of the welding current and/or of the distance between the welding spots.

13. Method according to one of the claims 10 to 12, **characterized in that** the overlapping of the edges of the body blank is taken as disturbance variable, particularly its geometry and/or size, and **in that** the compensation takes place by means of changing the following control variable:
variation of the welding current and/or of the distance between the welding spots.

14. Method according to one of the claims 10 to 13, **characterized in that** a temperature in the range of the welding process is taken as disturbance variable, particularly the temperature of at least one of the welding electrodes, wherein particularly renewable wire electrodes are provided, or the temperature of the calibration tool, and/or that a characteristic of the wire electrode system is taken as disturbance variable, particularly the wire profiling, and that the compensation takes place by means of changing the following control variable:
variation of the welding current and/or of the distance between the welding spots.

## Revendications

1. Dispositif pour la fabrication des corps de récipient en tôle métallique, particulièrement en tôle métallique étamée, comprenant un appareil de cintrage, un agencement de transport pour les récipients cintrés, particulièrement avec un rail en Z et une partie de tête, un outil de calibration avec une pluralité de rouleaux de calibration, un appareil de soudage avec un courant de soudage ajustable, particulièrement avec des fil-électrodes intermédiaires comme électrodes de soudage, **caractérisé en ce qu'**un agencement d'acquisition est prévu pour acquérir au moins une variable perturbatrice qui influence la qualité du joint soudé pendant le processus de fabrication, et **en ce qu'**un agencement de compensation pour compenser l'influence de la variable perturbatrice sur la qualité du joint soudé à l'aide d'au moins une variable de contrôle est prévu, l'agencement d'acquisition étant adapté à acquérir la variable perturbatrice à partir d'au moins une caractéristique du matériau du corps, et **en ce que** l'agencement d'acquisition est adapté à acquérir la géométrie de la coupe de la tôle métallique et/ou la présence de sourcils à la coupe de la tôle métallique comme caractéristique du matériau du corps, et **en ce que** l'agencement de compensation est configuré pour changer une ou plusieurs des variables suivantes:
déplacement horizontal et/ou vertical du rail en Z qui influence le chevauchement ou de sa partie de tête orientée vers l'outil de calibration, à l'aide d'un entraînement de déplacement;
déplacement horizontal et/ou vertical de l'outil de calibration à l'aide d'un entraînement de déplacement;
déplacement radial des rouleaux de calibration à l'aide d'un entraînement de déplacement et/ou d'une variation de la force des rouleaux qui agit sur le corps;
variation de la force de soudage;
variation du courant de soudage et/ou de la distance entre les points de soudage.

2. Dispositif selon la revendication 1, **caractérisé en ce que** l'agencement d'acquisition est adapté à acquérir l'étamage de la zone de bord comme caractéristique et **en ce que** l'agencement d'acquisition est adapté à changer une ou les deux variables de contrôle suivantes:
variation de la force de soudage;
variation du courant de soudage et/ou de la distance entre les points de soudage.

3. Dispositif selon l'une des revendications 1 ou 2, **caractérisé en ce que** l'agencement d'acquisition est adapté à acquérir l'épaisseur de la tôle métallique comme caractéristique et **en ce que** l'agencement d'acquisition est adapté à changer une ou les deux variables de contrôle suivantes:
variation de la force de soudage;
variation du courant de soudage et/ou de la distance entre les points de soudage.

4. Dispositif selon l'une des revendications 1 à 3, **caractérisé en ce que** l'agencement d'acquisition est adapté à acquérir la gamme de soudage entre un soudage avec une température trop haute et un soudage avec une température trop basse comme variable perturbatrice et **en ce que** l'agencement d'acquisition est adapté à changer une ou les deux variables de contrôle suivantes:
variation de la force de soudage;
variation du courant de soudage et/ou de la distance entre les points de soudage.

5. Dispositif selon l'une des revendications 1 à 4, **caractérisé en ce que** l'agencement d'acquisition est adapté à acquérir la résistance électrique de surface de la tôle métallique comme variable perturbatrice et **en ce que** l'agencement d'acquisition est adapté à changer une ou les deux variables de contrôle suivantes:
variation de la force de soudage;
variation du courant de soudage et/ou de la distance entre les points de soudage.

6. Dispositif selon l'une des revendications 1 à 5, **caractérisé en ce que** l'agencement d'acquisition est adapté à acquérir les caractéristiques de cintrage de la tôle métallique comme variable perturbatrice, et particulièrement sa limité d'élasticité, et **en ce que** l'agencement d'acquisition est adapté à changer une ou plusieurs variables de contrôle suivantes:
influence sur le cintrage en fermant ou ouvrant l'appareil de cintrage;
variation de la force de soudage;
variation du courant de soudage et/ou de la distance entre les points de soudage.

7. Dispositif selon l'une des revendications 1 à 6, **caractérisé en ce que** l'agencement d'acquisition est adapté à acquérir le chevauchement des bords des flans de tôle métallique comme variable perturbatrice et **en ce que** l'agencement d'acquisition est configuré à changer la variable de contrôle suivante:
variation du courant de soudage et/ou de la distance entre les points de soudage.

8. Dispositif selon l'une des revendications 1 à 7, **caractérisé en ce que** l'agencement d'acquisition est adapté à acquérir une température dans la zone du processus de soudage comme variable perturbatrice, particulièrement la température d'au moins une des électrodes de soudage, particulièrement des fil-électrodes renouvelables étant prévus, ou la température de l'outil de calibration, et **en ce que** l'agencement d'acquisition est configuré à changer la variable de contrôle suivante:
variation du courant de soudage et/ou de la distance entre les points de soudage.

9. Dispositif selon l'une des revendications 1 à 8, **caractérisé en ce que** l'agencement d'acquisition est adapté à acquérir une caractéristique du système des fil-électrodes comme variable perturbatrice, particulièrement le profil de fil, et **en ce que** l'agencement d'acquisition est configuré à changer la variable de contrôle suivante:
variation du courant de soudage et/ou de la distance entre les points de soudage.

10. Procédé pour la fabrication des corps de récipient en tôle métallique, particulièrement en tôle métallique étamée, des flans de corps de récipient étant cintrés et passés à un outil de calibration avec des bords chevauchés et étant ensuite soudés avec un courant de soudage régulé par des moyens de soudage à la molette, **caractérisé en ce qu'**au moins une variable perturbatrice qui influence la qualité du joint soudé pendant le processus de fabrication est acquise pendant le processus de fabrication et **en ce qu'**une compensation de l'influence de la variable perturbatrice sur la qualité du joint soudé a lieu à l'aide d'au moins une variable de contrôle,
la variable perturbatrice étant déterminée d'au moins une caractéristique du matériau de corps,
la géométrie de la coupe de la tôle métallique et/ou la présence des sourcils à la coupe de la tôle métallique étant utilisée comme caractéristique du matériau de corps, et
la compensation ayant lieu en changeant une ou plusieurs variables de contrôle suivantes:
déplacement horizontal et/ou vertical du rail en Z qui influence le chevauchement ou de sa partie de tête orientée vers l'outil de calibration;
déplacement horizontal et/ou vertical de l'outil de calibration;
déplacement radial des rouleaux de calibration et/ou d'une variation de la force des rouleaux qui agit sur le corps;
variation de la force de soudage;
variation du courant de soudage et/ou de la distance entre les points de soudage.

11. Procédé selon la revendication 10, **caractérisé en ce que** l'étamage de la zone de bord est pris comme variable perturbatrice et/ou l'épaisseur de la tôle métallique est prise comme variable perturbatrice et/ou la gamme de soudage entre un soudage avec une température trop haute et un soudage avec une température trop basse est prise comme variable perturbatrice et/ou la résistance électrique de surface de la tôle métallique est prise comme variable perturbatrice et **en ce que** la compensation a lieu à l'aide d'au moins une variable de contrôle suivantes:
variation de la force de soudage;
variation du courant de soudage et/ou de la distance entre les points de soudage.

12. Procédé selon l'une des revendications 10 ou 11, **caractérisé en ce que** les caractéristiques de cintrage de la tôle métallique et particulièrement sa limité d'élasticité sont prises comme variable perturbatrice et **en ce que** la compensation a lieu en changeant une ou plusieurs variables de contrôle suivantes:
influence sur le cintrage en fermant ou ouvrant l'appareil de cintrage;
variation de la force de soudage;
variation du courant de soudage et/ou de la distance entre les points de soudage.

13. Procédé selon l'une des revendications 10 à 12, **caractérisé en ce que** le chevauchement des bords du flan de tôle métallique est pris comme variable perturbatrice, particulièrement sa géométrie et/ou taille, et **en ce que** la compensation a lieu en changeant la variable de contrôle suivante:
variation du courant de soudage et/ou de la distance entre les points de soudage.

14. Procédé selon l'une des revendications 10 à 13, **caractérisé en ce qu'**une température dans la zone du processus de soudage est prise comme variable perturbatrice, particulièrement la température d'au moins une des électrodes de soudage, particulièrement des fil-électrodes renouvelables étant prévus, ou la température de l'outil de calibration, et **en ce qu'**une caractéristique du système des fil-électrodes est prise comme variable perturbatrice, particulièrement le profil de fil, et **en ce que** la compensation a lieu en changeant la variable de contrôle suivante:
variation du courant de soudage et/ou de la distance entre les points de soudage.
